**Europäisches Patentamt**

**European Patent Office**

**Office européen des brevets**

(19)

(11) Veröffentlichungsnummer: **0 046 231**
**A1**

(12) ## EUROPÄISCHE PATENTANMELDUNG

(21) Anmeldenummer: **81106078.9**

(22) Anmeldetag: **04.08.81**

(51) Int. Cl.³: **G 11 B 5/09**
**// G11B5/012**

(30) Priorität: **14.08.80 DE 3030759**

(43) Veröffentlichungstag der Anmeldung: **24.02.82**
**Patentblatt 82/8**

(84) Benannte Vertragsstaaten: **AT BE CH DE FR GB IT LI LU NL SE**

(71) Anmelder: **Licentia Patent-Verwaltungs-GmbH, Theodor-Stern-Kai 1, D-6000 Frankfurt/Main 70 (DE)**

(72) Erfinder: **Scholz, Werner, Dipl.-Ing., Osterstrasse 20, D-3007 Gehrden (DE)**

(74) Vertreter: **Einsel, Robert, Dipl.-Ing., Theodor-Stern-Kai 1, D-6000 Frankfurt/Main 70 (DE)**

(54) **Schaltung zur Zeitfehlerbeseitigung bei der Wiedergabe taktbehafteter Signale, insbesondere bei einer Digitaltonplatte.**

(57) In einer solchen Schaltung bei der Daten von einem Aufzeichnungsmedium in einen Pufferspeicher (15) gelesen und mit einer festen Taktfrequenz ($f_2$) aus dem Kupferspeicher (15) ausgelesen werden, wird die mittlere Taktfrequenz ($f_1$) zum Einlesen in den Pufferspeicher vom Füllzustand des Pufferspeichers (15) derart abhängig gemacht, daß im Mittel ein vorgegebenes Verhältnis der Pufferbereiche bereitgestellt ist.

Licentia Patent-Verwaltungs-GmbH
Theodor-Stern-Kai 1

6000 Frankfurt/Main 70


Hannover, den 23.07.1980
UE2-Me/gn


Schaltung zur Zeitfehlerbeseitigung bei der Wiedergabe taktbehafteter Signale, insbesondere bei einer Digitaltonplatte


Damit bei der Wiedergabe eines von einem Aufzeichnungsmedium
(Platte, Band) abgetasteten Signals eine Zeitfehlerkorrektur
durchgeführt werden kann, muß das Signal schon bei der Aufzeichnung mit einem Zeittakt versehen sein. Impulsmodulierte
Signale enthalten naturgemäß selbst diesen Takt. Aber auch
Analogsignale können einen Zeittakt enthalten. Z.B. können
die Zeilenimpulse eines Videosignals als Zeittakt verwendet
werden. Bei analogen Tonsignalen muß jedoch der Zeittakt
zusätzlich in Form einer Pilotfrequenz aufgezeichnet werden.
Da der Zeittakt die gleichen zeitlichen Verzerrungen erleidet
wie das Signal, können mit Hilfe dieses Taktes Zeitfehler
ermittelt und auch beseitigt werden.

Die Zeitfehlerbeseitigung erfolgt im einfachsten Fall mit
einem Pufferspeicher. In diesen Speicher werden Abtastwerte
des Signals, die vor der Aufzeichnung gleichen zeitlichen Abstand hatten, eingelesen. Der Einlesetakt muß dazu aus dem
aufgezeichneten Takt gewonnen werden. Werden dann die Abtastwerte wieder in konstanten Zeitabständen ausgelesen, so
sind die Zeitfehler beseitigt. Bei impulsmodulierten Signalen

0046231
H 80/53

liegt das Signal bereits in Form von Abtastwerten vor, und
je nach Codierung (PAM oder PCM) wird die Verwendung eines
Analog- oder Digitalspeichers zweckmäßig sein. Analogsignale
werden erst beim Einlesen in den Pufferspeicher mit dem aufgezeichneten Zeittakt abgetastet.

Bei der Wiedergabe getakteter Signale, die z.B. von einer
Platte in Form eines PCM-Signals abgenommen werden, ist es im
allgemeinen erforderlich, eine Zeitfehlerkorrektur durchzuführen. Durch Exzentrizitäten der Platte, Ungenauigkeiten im
Antrieb, Höhen- und Seitenschläge entstehen Zeitfehler, die bei
einer digitalen Tonaufzeichnung zu Störungen im wiederzugebenden Signal führen, die bei hohen Ansprüchen, die an eine
digitale Aufzeichnung gestellt werden, im allgemeinen nicht
tragbar sind.

Es ist vorgeschlagen worden, den Ausgleich von Fehlern dadurch durchzuführen, daß die Daten mit einer ersten aus dem
Signal erzeugten Taktfrequenz in einen Speicher eingelesen
werden, von dem sie mit einer zweiten Frequenz ausgelesen
und einer Wiedergabeeinrichtung zugeführt werden. Die Taktfrequenz, mit der die Daten in den Pufferspeicher eingelesen
werden, wird dabei von einer PLL-Schaltung mit kleiner Zeitkonstante erzeugt. Die zweite Taktfrequenz zum Auslesen der
Daten aus dem Pufferspeicher wird ebenfalls mit einer zweiten
PLL-Schaltung aus dem Datensignal gewonnnen, jedoch enthält
diese PLL-Schaltung eine gegenüber der ersten PLL-Schaltung
sehr große Zeitkonstante, die somit kurzzeitige Schwankungen
der Zeitbasis der Daten ausgleicht. Im Mittel müssen Einlese-
und Auslesetakt in der Frequenz übereinstimmen, damit ein Überlaufen des zur Korrektur verwendeten Pufferspeichers vermieden wird. Das Auslesen des zeitlich korrigierten Signals
erfolgt mit Hilfe des aus der zweiten PLL-Schaltung abgeleiteten möglichst konstanten Auslesetaktes. Damit läßt sich in
bestimmten Fällen, insbesondere bei höherfrequenten Zeitfehlern, eine ausreichende Zeitfehlerkorrektur erreichen.

0046231
H 80/53

Bei der Beseitigung sehr niederfrequenter Zeitbasisschwankungen bereitet dieses Verfahren Schwierigkeiten, da dann
die Zeitkonstante der zweiten PLL-Schaltung entsprechend groß
sein muß. Diese große Zeitkonstante wirkt sich ungünstig auf
das Fangverhalten und die Stabilität der PLL-Schaltung aus.
Mehr oder weniger große Restfehler müssen in Kauf genommen
werden.

Insbesondere bei Tonplatten mit einer Umdrehungszahl kleiner
200 Umdrehungen pro Minute läßt sich obiges Verfahren nicht
mehr anwenden, da dann niederfrequente Zeitfehlerstörungen
von weniger 3 Hz auftreten können. In der technischen Beschreibung zur PCM Audio Unit PCM1 der Firma Sony ist zum
Zeitfehlerausgleich eine PLL-Schaltung mit einem Oszillator
mit extrem hohen Anforderungen angeführt (Litium-Tantal-
Kristalloszillator mit extrem hoher Frequenzstabilität und
einem extra breiten Frequenzbereich).

Um derart hohe Anforderungen zu umgehen, wurde bereits vorgeschlagen, den Auslesetakt nicht aus einer PLL-Schaltung zu
erzeugen, sondern direkt einem freischwingenden Quarzoszillator zu entnehmen, der gleichzeitig den Antrieb der
Platte synchronisiert. Die Zeitbasis hängt daher nur noch
von der Frequenzstabilität des Quarzoszillators ab und ist
somit als konstant anzusehen. Es können daher auch sehr
langsame Zeitschwankungen vollständig beseitigt werden.

Dieses Prinzip führt aber bei längeren Spielzeiten (z.B.
1 Stunde) durch die begrenzte Kapazität des Pufferspeichers
(2 bis 3ms) zu Schwierigkeiten. Toleranzen des Abtasters
über den Radius der Platte, Temperatureinflüsse im Synchronantrieb oder bestimmte Arten von Bitfehlern können dazu
führen, daß die Grenze des Pufferspeichers während der Spielzeit erreicht wird. Das Überschreiten der Speichergrenze führt
zu einem in der Wiedergabeanlage hörbaren Fehler.

Es ist daher Aufgabe der Erfindung, eine Schaltung anzugeben, die einen vollkommenen Zeitfehlerausgleich durchführt und ein Überlaufen des Pufferspeichers verhindert.

Die Aufgabe wird durch die im Anspruch 1 angegebene Erfindung gelöst. Weitergehende Merkmale der Erfindung sind in den Unteransprüchen beschrieben.

Das Auslesen des Nutzsignals aus dem Pufferspeicher erfolgt wegen der Verwendung eines freischwingenden Quarzoszillators mit absolut konstanter Frequenz. Durch die Überwachung der Differenz der Zählerstände von Auslese- und Einlesezähler läßt sich durch geringfügige Änderung des Einlesetaktes über den Spielerantrieb die Differenz der Zählerstände von Einlese- und Auslesezähler auf einem mittleren optimalen Wert halten. Der Auslesetakt bleibt unbeeinflußt. Auch bei sehr langen Spielzeiten entsteht kein Überlaufen des Pufferspeichers. Durch die erfindungsgemäße Schaltung wird die Frequenz des Einlesetaktes jeweils so geändert, daß der Pufferspeicher in seinem optimalen Arbeitsbereich gehalten wird. Ein Überlaufen des Speichers ist damit verhindert.

Die Erfindung wird nachstehend an Hand eines Ausführungsbeispiels näher beschrieben. Es zeigen:

Fig. 1 eine bekannte Schaltung mit zwei PLL-Schaltungen,
Fig. 2 eine Anordnung zur Aufzeichnung eines digitalen Signals,
Fig. 3 eine Anordnung zur Wiedergabe eines nach Fig. 2 aufgezeichneten Signals,
Fig. 4 eine Darstellung zur Erläuterung der Wirkungsweise des Pufferspeichers,
Fig. 5 eine Darstellung der erfindungsgemäßen Anordnung,
Fig. 6 eine Ausführungsform eines Synchronantriebs,
Fig. 7 ein Ausführungsbeispiel zur Erzeugung der unterschiedlichen Teilerverhältnisse.

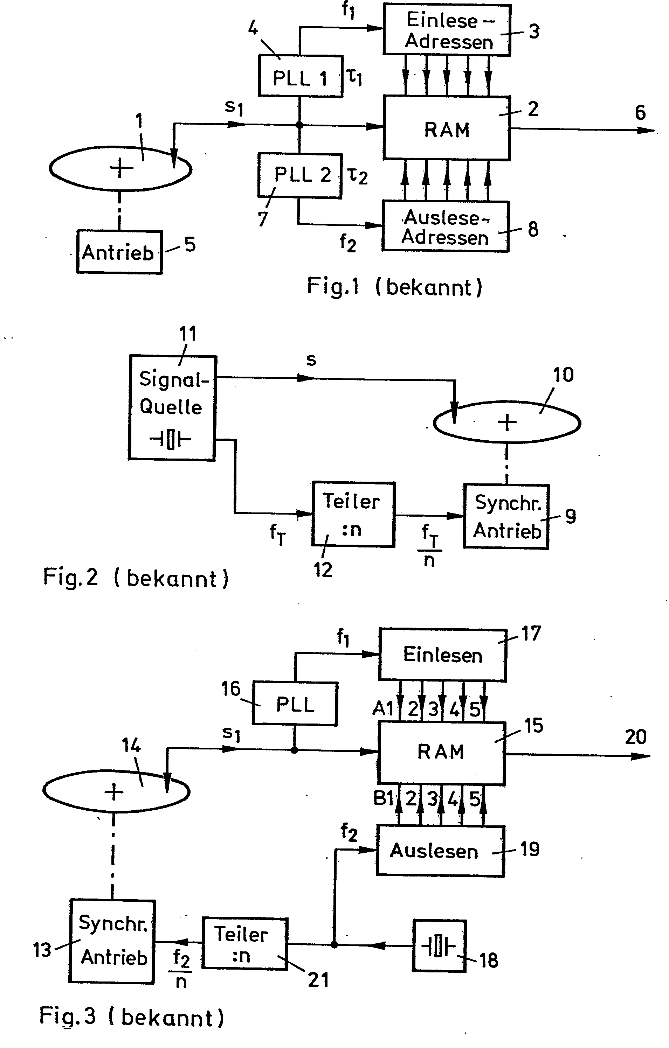

Bei der in Fig. 1 dargestellten bekannten Wiedergabeeinrichtung werden die von der Platte 1 abgenommenen Daten einem Pufferspeicher 2 zugeführt, dessen Speicherplätze durch Angabe der Einleseadressen aus dem Einlesezähler 3 definiert
werden. Die Taktfrequenz des Einlesezählers 3 wird mit einer
PLL-Schaltung 4 aus den Daten, die von der Platte kommen,
ermittelt. Zeitfehler, die auf der Platte 1 oder im Antrieb 5
entstehen, führen zur Änderung des Einlesetaktes. Die Zeitkonstante der PLL-Schaltung 4 ist so zu wählen, daß die Daten
von der Platte sicher in den Pufferspeicher 2 gelangen können.
Um am Ausgang 6 des Pufferspeichers die von der Platte kommenden Daten mit einer konstanten Zeitbasis zu erhalten,
steuert eine zweite PLL-Schaltung 7 den Auslesezähler 8,
der die Daten an den Ausgang 6 angibt. Die Taktfrequenz des
Auslesezählers 8 wird ebenfalls aus den Daten, die direkt
von der Platte kommen, ermittelt. Die Zeitkonstante der
zweiten PLL-Schaltung 7 ist sehr viel größer gewählt als
die Zeitkonstante der ersten PLL-Schaltung 4. Im Mittel
müssen die Taktfrequenzen des Einlesezählers und des Auslesezählers übereinstimmen, damit ein Überlaufen des zur Korrektur verwendeten Pufferspeichers 2 vermieden wird. Bei der
Beseitigung sehr niederfrequenter Zeitbasisschwankungen
bereitet dieses Verfahren Schwierigkeiten, da dann die Zeitkonstante der zweiten PLL-Schaltung 7 entsprechend groß sein
muß. Diese große Zeitkonstante wirkt sich ungünstig auf das
Fangverhalten und die Stabilität der PLL-Schaltung aus. Mehr
oder weniger große Restfehler müssen in Kauf genommen werden.

Fig. 2 und 3 stellen die Aufzeichnungs- und Wiedergabeseite
eines Systems dar, bei dem auch sehr langsame Zeitschwankungen vollständig beseitigt werden können. Bei der Aufzeichnung entsprechend Fig. 2 ist die Aufzeichnung dabei
über einen Teiler 12 und einen Synchronantrieb 9 für den
Aufzeichnungsträger 10 mit dem Signaltakt verkoppelt. Der
Signaltakt wird aus einer Signalquelle 11 mit hochkonstantem
Quarzoszillator erzeugt. Die aus dem Quarzoszillator abgeleitete Taktfrequenz steuert über den Teiler 12 den Synchronantrieb 9.

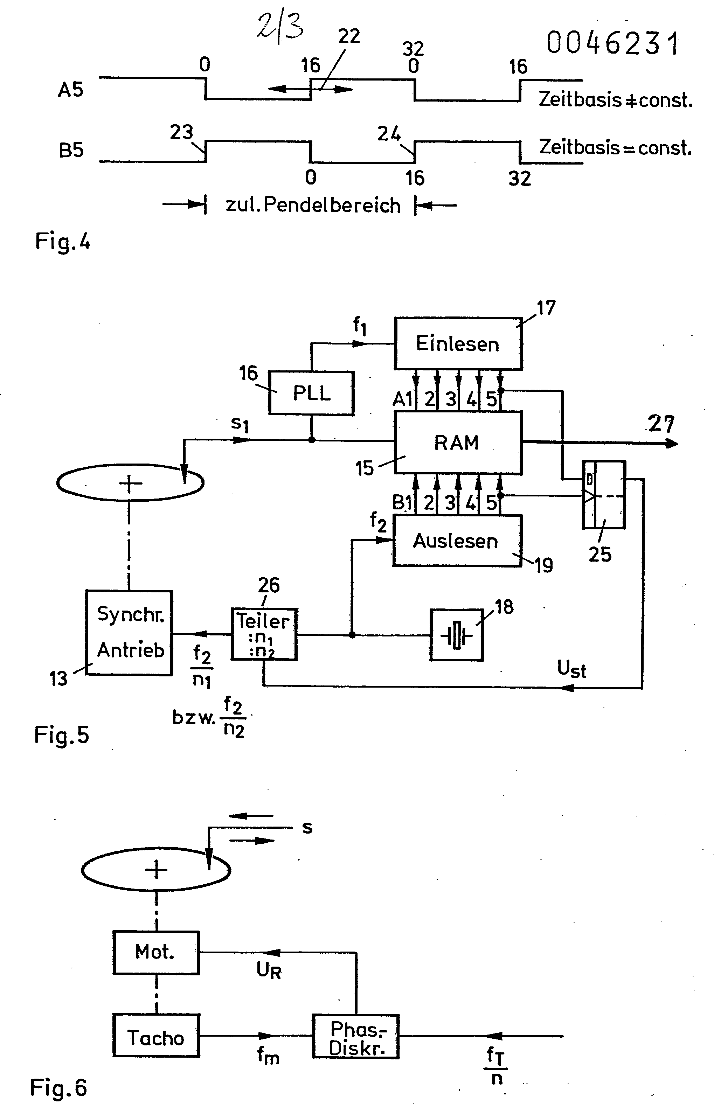

Als Synchronantrieb wird hier ein Antrieb bezeichnet, dessen Drehzahl in einem genau definierten Verhältnis zu einer Eingangsfrequenz steht. Dies kann z.B. ein normaler Synchronmotor sein oder ein phasengeregelter Antrieb unter Anwendung eines Tachogenerators, wie in Fig. 6 dargestellt.

Entsprechend Fig. 3 wird bei der Wiedergabe ebenfalls ein Synchronantrieb 13 verwendet. Der zum Einlesen der Daten von der Platte 14 in den Pufferspeicher 15 erforderliche Einlesetakt wird von einer PLL-Schaltung 16 aus den Daten ermittelt. Diese PLL-Schaltung 16 hat eine kleine Zeitkonstante, so daß Schwankungen der Daten keine Störungen verursachen. Der Einlesezähler 17 ordnet den ankommenden Daten bestimmte Adressen im Speicher zu. Der Speicher 15 besteht vorzugsweise aus einem RAM Schaltkreis. Das Auslesen der Daten aus dem Speicher 15 erfolgt mit konstanter Taktfrequenz, die aus einem Quarzoszillator 18 abgeleitet wird. Da der Auslesezähler 19 mit konstanter Taktfrequenz arbeitet, ergibt sich am Ausgang 20 des Pufferspeichers eine Datenfolge mit absolut konstanter Zeitbasis. Über den Teiler 21 wird der Synchronantrieb 13 mit dem Auslesetakt gekoppelt. Die Frequenzteilerstufe 21 ist dabei so bemessen, daß die aus dem abgetasteten Signal gewonnene Taktfrequenz im Mittel mit der Auslesefrequenz übereinstimmt. Da diese Frequenz absolut konstant ist, sind auch alle Zeitfehler vollständig beseitigt. Dieses Prinzip führt bei längeren Spielzeiten (z.B. 1 Stunde) durch die begrenzte Kapazität des Pufferspeichers (2 bis 3 ms) zu Schwierigkeiten.

Zu Beginn einer Abspielung können zwar Einlesezähler 17 und Auslesezähler 19 so gesteuert werden, daß der Speicher in beiden Richtungen je die halbe Speicherkapazität zum Ausgleich von Schwankungen verfügbar hat. Diese optimale Betriebsweise des Pufferspeichers 15 ist bei Verwendung von Binärzählern dann vorhanden, wenn die höchstwertigen Ausgangssignale von Einlesezähler 17 und Auslesezähler 19 ($A_5$ und $B_5$) genau gegenphasig verlaufen.

Für den störungsfreien Betrieb über eine längere Spielzeit müssen also zwei Bedingungen erfüllt werden : 1. Die Speicherkapazität muß der größtmöglichen Zeitschwankung entsprechen, 2. die mittlere Differenz zwischen Einlese- und Auslesezählerstand soll gleich der halben Speicherplatzzahl sein und soll sich während der Spielzeit nicht verändern.

Schon das Einstellen der optimalen Differenz zwischen Einlesezähler 17 und Auslesezähler 19 zu Beginn der Abspielung ist problematisch. Gerade bei Beginn der Abspielung kann der Antrieb noch pendeln. Es sind daher Maßnahmen zur Erkennung eines Nulldurchganges der Zeitschwankung oder ein entsprechend großer Pufferspeicher erforderlich. Im Moment des Nulldurchganges muß dann das Setzen des Zählers erfolgen. Die Winkellage des Synchronantriebes 13 kann sich im Laufe der Abspielung z.B. durch Motorerwärmung verändern. Drop outs können Störungen des Einlesetaktes verursachen, die sich im Laufe der Zeit addieren. Beim Abspielen einer Platte können auch durch eine nicht genau radiale Bewegung des Abtasters zeitliche Verschiebungen des abgetasteten Signals entstehen. Wenn durch derartige Einflüsse der zeitliche Pufferbereich des Speichers 15 einseitig eingeschränkt wird, können Zeitschwankungen zu ständigen Überschreitungen der Speicherkapazität und damit zu Störungen führen.

In Fig. 4 sind die Spannungsverläufe an den höchstwertigen Ausgängen des Auslesezählers 19 und des Einlesezählers 17 einander gegenüber gestellt. Bei konstant angenommener Zeitbasis der Auslesung ($B_5$) darf dabei das Signal $A_5$ des Einlesezählers soweit pendeln, daß die Flanke 22 den zulässigen Pendelbereich zwischen den Flanken 23 und 24 nicht überschreitet. Da immer irgendwelche Schwankungen auszugleichen sind, ist möglichst der Mittelwert zwischen den beiden Endwerten 23 und 24 zu wählen. Diese optimale Arbeitslage des Pufferspeichers ist also vorhanden, wenn die Signale $A_5$ und $B_5$ gegenphasig verlaufen. In der erfindungsgemäßen Schaltung nach Fig. 5 werden daher das höchstwertige Adressierungssignal

des Einlesezählers 17 ($A_5$) und das höchstwertige Adressierungssignal des Auslesezählers 19 ($B_5$) auf eine Phasenvergleichseinrichtung gegeben. Hier dient als Phasenvergleichseinrichtung ein D-Flip-Flop 25, das je nachdem, ob die
ansteigende Flanke des Signals $B_5$ auf einen Bereich logisch
1 oder logisch 0 des Signals $A_5$ fällt, ein Steuersignal entsprechend logisch 1 oder logisch 0 abgibt. Das Steuersignal
$U_{ST}$ führt zu einem zwischen zwei Werten umschaltbaren Teiler
26, der die im Quarzoszillator 18 erzeugte Frequenz um eins
der beiden Teilerverhältnisse $n_1$ oder $n_2$ herunterteilt. Die
beiden Teilerverhältnisse liegen dabei um einen geringen Betrag über bzw. unter dem richtigen Wert. Mit der heruntergeteilten Frequenz wird der Synchronantrieb gesteuert.

Die in Fig. 4 eingetragenen Zählwerte beziehen sich auf einen
5-bit-Zähler, d.h. der adressierbare Pufferspeicher hat
$2^5$ = 32 Speicherplätze, wobei jeder Speicherplatz z.B. ein
vollständiges Datenwort, das einen Abtastwert darstellt,
aufnehmen kann. Der hier als Beispiel verwendete Pufferspeicher kann also Zeitschwankungen von $\pm$ 16 Abtastintervallen ausgleichen, wenn die mittlere Differenz der Zählerstände von Einlesezähler und Auslesezähler auf dem Wert 16
gehalten wird.

Das D-Flip-Flop 25 liefert eine Spannung $U_{ST}$, die davon abhängig ist, ob die Differenz der Zählerstände von Einlesezähler 17 und Auslesezähler 19 den Wert 16 überschreitet
oder unterschreitet. Die Einlesetaktfrequenz wird dann über
den Antrieb des Abspielgerätes jeweils so verändert, daß
die Differenz der Zählerstände immer dem Wert 16 zustrebt.
Wenn also Abweichungen, die längerer Dauer sind, im Einlesetakt auftreten, so wird durch die Steuerspannung $U_{ST}$
dasjenige Teilerverhältnis im Teiler 26 eingestellt, das
über den Signalantrieb die Geschwindigkeit der Platte derart
verändert, daß die mittlere Frequenz des Einlesetaktes den
Abstand zwischen Einlese- und Ausleseplatz des Pufferspeichers so gut wie möglich auf dem vorgegeben Optimalwert hält. Dabei bleibt die Frequenz des Auslesetaktes für den Auslesezähler 19 konstant, so daß die vollständige Zeitfehlerbeseitigung für das am Ausgang 27 anliegende Signal weiterhin gewährleistet ist.

Die optimale Voreinstellung des Pufferspeichers muß nicht die Mitte des Speicherbereiches sein. Wenn mit unsymmetrischen Zeitschwankungen zu rechnen ist, kann es vorteilhaft sein, auf ein entsprechendes Zählverhältnis zu regeln. Dazu können auch besondere Zählstufen verwendet werden, die mit dem Einlese- und Auslesezähler verkoppelt sind.

Durch die beiden Teilerverhältnisse wird die mittlere Frequenz des Einlesetaktes einmal geringfügig über ihren Sollwert und einmal darunter eingestellt, indem die Auslesetaktfrequenz durch den von der Spannung $U_{ST}$ gesteuerten Teiler durch $n_1$ bzw. $n_2$ geteilt wird. In einem Beispiel beträgt der Sollwert $n = 2160$, das Teilerverhältnis $n_1 = 2159$ und das Teilerverhältnis $n_2 = 2161$. Der mittlere Wert der Einlesetaktfrequenz wird also um weniger als $\pm 0,5^o/oo$ verändert. Durch diese geringen Frequenzabweichungen wird weder der Synchronantrieb noch die PLL-Schaltung 16 zur Erzeugung der Einlesetaktfrequenz beeinträchtigt.

Durch die Frequenzsprünge können zwar zusätzliche Pendelungen des Antriebs angeregt werden, die Anregung ist dabei in Folge der Geringfügigkeit der Frequenzsprünge so schwach, daß die damit verbundenen zusätzlichen Zeitfehler noch keine Vergrößerung des Pufferspeichers 15 erfordern. Der Pufferspeicher wird dagegen ständig in der optimalen Ausgangsposition zum Auffangen von Zeitschwankungen in beiden Richtungen gehalten. Es ergibt sich sogar die Möglichkeit, den Pufferspeicher kleiner als bei der Schaltung nach Fig. 3 zu wählen, da die Gefahr, daß der Pufferspeicher 15 seine Endlage erreicht, wesentlich verringert ist.

Statt des umschaltbaren Teilers könnte auch ein fester Teiler verwendet werden, und der Frequenz, die als Impulsspannung am Teilereingang des Teilers 26 ansteht, können mehr oder weniger Impulse zugeführt oder auch abgezogen werden. Sofern es sich bei dem Synchronantrieb 13 nicht um einen echten Synchronmotor, sondern um einen phasengeregelten Antrieb unter Verwendung eines Tachogenerators entsprechend Fig. 6 handelt, könnte die Veränderung der Einlesetaktfrequenz im Prinzip auch durch Veränderung der vom Tachogenerator gelieferten Frequenz $f_m$ herbeigeführt werden. Hierzu müßte aber der Tacho eine verhältnismäßig hohe Frequenz liefern, und der Phasenvergleich müßte bei einer sehr tiefen Frequenz erfolgen, so daß zwischen Tacho und Phasendiskriminator ein Frequenzteiler angeordnet werden könnte. Anderenfalls ist die Erzeugung genügend kleiner Frequenzänderungen nur schwer durchführbar.

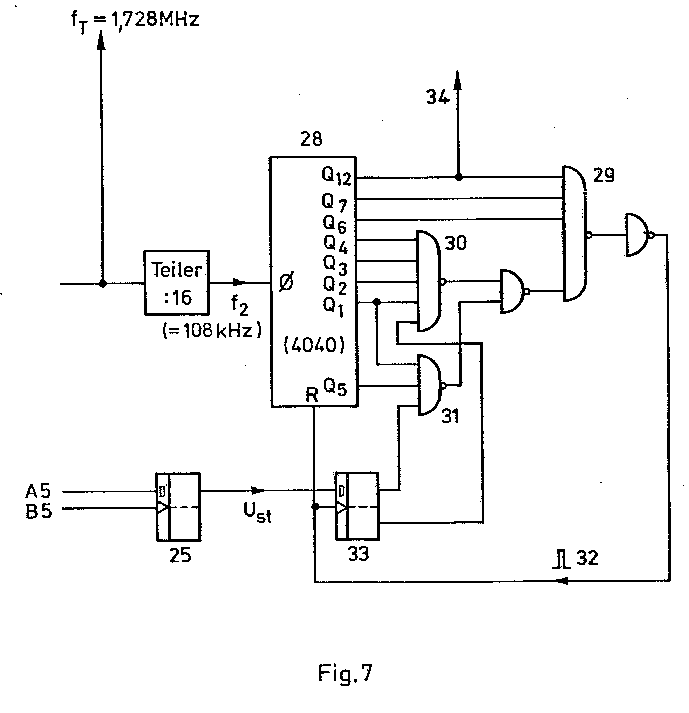

Fig. 7 zeigt eine Schaltungsanordnung zur Erzeugung der Teilerverhältnisse $n_1$ und $n_2$. Aus der konstanten Quarzfrequenz $f_T$ wird über einen Teiler durch 16 die Frequenz $f_2$, die der Eingangsfrequenz für den umschaltbaren Teiler entspricht, erzeugt. Der umschaltbare Teiler besteht hier aus einem 12-stufigen Binärzähler 28 (z.B. CD 4040 von RCA), der jeweils nach einer Anzahl von Eingangsimpulsen, die dem Teilungsverhältnis entspricht, auf Null zurückgestellt wird. Der Rückstellimpuls entsteht jedesmal, sobald alle Eingänge des Gatters 29 auf logisch 1 sind. Die oberen drei Eingänge dieses Gatters sind nach $2^{11} + 2^6 + 2^5 = 2144$ Eingangsimpulsen auf logisch 1. Der untere Eingang von Gatter 29 geht je nachdem, ob über Flip-Flop 23 Gatter 30 oder 31 betriebsbereit geschaltet ist, nach weiteren 15 oder 17 Impulsen auf logisch 1. Damit zählt die gesamte Zählschaltung in Abhängigkeit vom Zustand des Flip-Flops 33 entweder bis $n_1 = 2159$ oder bis $n_2 = 2161$. Flip-Flop 33 wird in Abhängigkeit von $U_{ST}$ mit jedem Rückstellimpuls 32 eingestellt und behält diese Einstellung bis zum nächsten Rückstellimpuls bei. Am Ausgang 34 liegt die durch das Teilerverhältnis $n_1$ bzw. $n_2$ geteilte Frequenz $f_2$ an.        Im ausgeführten Beispiel betrug bei einem Sollwert des Teilerverhältnisses n = 2160 die Frequenz $f_2$ / n = 50 Hz. Die erfindungsgemäß vom Sollwert abweichenden Teilerverhältnisse $n_1$ und $n_2$ betrugen 2159 bzw. 2161.

Der Teiler 12 in der Aufzeichnungseinrichtung (Fig. 2) und der Teiler 26 in der Wiedergabeeinrichtung (Fig. 5) kann auch ein fein abgestufte programmierbare Teiler sein, der über einen größeren Bereich veränderbar ist. Dabei kann beim Aufzeichnen das Teilerverhältnis in aufeinanderfolgenden Stufen ständig verkleinert oder vergrößert werden, so daß sich auch die Drehzahl ständig entsprechend ändert. Bedingt durch diese Aufzeichnungsart ist dann für jeden Radius ein bestimmtes Sollteilerverhältnis vorgegeben, das bei der Wiedergabe eingestellt werden muß.

Besitzt nun die Wiedergabeeinrichtung den gleichen programmierbaren Teiler wie die Aufzeichnungseinrichtung, und wird das Weiterschalten der Teilerverhältnisse bei der Wiedergabe durch die Spannung $U_{ST}$, d.h. durch den Zustand des Pufferspeichers gesteuert, so ist im Mittel ständig das durch die Aufzeichnung vorgegebene Teilerverhältnis eingestellt. Die erfindungsgemäße Überwachung des Pufferbereiches für den Zeitfehlerausgleich zwecks Steuerung des Antriebs für den Aufzeichnungsträger ist also auch hilfreich beim Abspielen von Aufzeichnungen, die mit veränderlicher Antriebsdrehzahl hergestellt wurden. Zu Beginn des Abspielvorganges muß allerdings einmal die richtige Antriebsdrehzahl voreingestellt werden, danach folgt dann die Wiedergabeeinrichtung automatisch dem Drehzahlverlauf bei der Aufzeichnung, vorausgesetzt, daß die einzelnen Drehzahlsprünge durch das Umschalten des programmierbaren Teilers einen bestimmten Wert nicht überschreiten.

Patentansprüche

1. Schaltung zur Zeitfehlerbeseitigung bei der Wiedergabe taktbehafteter Signale, insbesondere bei einer Digitaltonplatte, bei der Daten von einem Aufzeichnungsmedium mit einer ersten Taktfrequenz in einen Pufferspeicher gelesen werden und das Auslesen aus dem Pufferspeicher mit einer zweiten Taktfrequenz erfolgt, wobei die erste Taktfrequenz mit der zweiten Taktfrequenz über eine Antriebseinrichtung des Aufzeichnungsmediums verkoppelt ist, dadurch gekennzeichnet, daß die erste Taktfrequenz über die Antriebseinrichtung so beeinflußt wird, daß der Pufferspeicher (15) im Mittel ein vorgegebenes Verhältnis der Pufferbereiche für vor- und nacheilende Signalanteile bereitstellt.

2. Schaltung nach Anspruch 1, dadurch gekennzeichnet, daß die Periodenzahlen der ersten und der zweiten Taktfrequenz mit Hilfe von Zählschaltungen (17,19) verglichen werden, und das Zählergebnis eine Information über die jeweils verfügbaren Pufferbereiche darstellt.

3. Schaltung nach Anspruch 1, dadurch gekennzeichnet, daß die Pufferbereiche für vor- und nacheilende Signalanteile gleich groß sind (Fig. 4).

4. Schaltung nach Anspruch 1, dadurch gekennzeichnet, daß die Einstellung der ersten Taktfrequenz durch ein in einem Teiler (26) einstellbares Teilerverhältnis zwischen zweiter Taktfrequenz und der zum Steuern der Antriebseinrichtung (13) des Aufzeichnungsmediums erforderlichen Frequenz erfolgt.

5. Schaltung nach Anspruch 1, dadurch gekennzeichnet, daß die zweite Taktfrequenz aus einem freischwingenden Oszillator (18) erzeugt wird.

0046231

6. Schaltung nach den Ansprüchen 4 und 5, dadurch gekennzeichnet, daß für eine feste Antriebsdrehzahl die zum Steuern der Antriebseinrichtung erforderliche Frequenz durch Teilung der Taktfrequenz des Oszillators mit einem ersten und zweiten Teilerverhältnis ($n_1$, $n_2$) gebildet wird.

7. Schaltung nach den Ansprüchen 4 und 5, dadurch gekennzeichnet, daß für eine veränderliche Antriebsdrehzahl die zum Steuern der Antriebseinrichtung (13) erforderliche Frequenz durch Teilung der Frequenz des Oszillators mit einem auf eine Vielzahl fein abgestufter Teilerverhältnisse einstellbaren Teiler (26) gebildet wird.

8. Schaltung nach den Ansprüchen 2, 6, 7, dadurch gekennzeichnet, daß die Umschaltung des Teilerverhältnisses aus einem Vergleich des Standes eines Einlesezählers (17) und eines Auslesezählers (19) des Speichers (15) gesteuert wird.

9. Schaltung nach den Ansprüchen 6 und 7, dadurch gekenn-zeichnet, daß die Teilerverhältnisse ($n_1$, $n_2$) geringfügig über und unter einem Sollteilerverhältnis (n) liegen, das die richtige Frequenzverkopplung zwischen Einlesetakt und Auslesetakt herstellen würde.

10. Schaltung nach Anspruch 6, dadurch gekennzeichnet, daß das erste und das zweite Teilerverhältnis um ca. 0,25 – 1°/oo über und unter dem Sollteilerverhältnis liegen.

11. Schaltung nach Anspruch 1, dadurch gekennzeichnet, daß die erste Taktfrequenz mit Hilfe einer PLL-Schaltung (16) aus den Daten gewonnen wird.

12. Schaltung nach Anspruch 8, dadurch gekennzeichnet, daß die höchstwertigen Adressensignale ($A_5$, $B_5$) des Einlese-und Auslesezählers (17, 19) mit einem D-Flip-Flop (25) verglichen werden.

13. Schaltung nach Anspruch 12, <u>dadurch gekennzeichnet</u>, daß die erste Taktfrequenz so beeinflußt wird, daß die höchstwertigen Adressensignale ($A_5$, $B_5$) von Einlese- und Auslesezähler (17, 19) im Mittel gegenphasig verlaufen.

14. Schaltung nach Anspruch 1, <u>dadurch gekennzeichnet</u>, daß zum Antrieb des Aufzeichnungsmediums ein Synchronmotor verwendet wird.

15. Schaltung nach Anspruch 1, <u>dadurch gekennzeichnet</u>, daß zum Antrieb des Aufzeichnungsmediums ein phasengeregelter Motor (Fig. 6) verwendet wird.

16. Schaltung nach Anspruch 15, <u>dadurch gekennzeichnet</u>, daß ein Tachogenerator die von der Motordrehzahl abhängige Vergleichsfrequenz liefert.

17. Schaltung nach Anspruch 15, <u>dadurch gekennzeichnet</u>, daß die Veränderung der ersten Taktfrequenz durch Veränderung der vom Tachogenerator gelieferten Frequenz ($f_m$) herbeigeführt wird.

18. Schaltung nach Anspruch 4, <u>dadurch gekennzeichnet</u>, daß die erste Taktfrequenz beeinflußt wird, indem am Eingang des Teilers (26) zusätzliche Impulse addiert oder Impulse unterdrückt werden.

19. Schaltung nach Anspruch 1, <u>dadurch gekennzeichnet</u>, daß der Pufferspeicher (15) ein Digitalspeicher ist, und die vom Aufzeichnungsmedium in analoger Form kommenden Daten über einen Analog/Digital-Wandler auf den Pufferspeicher (15) gegeben werden.

20. Schaltung nach Anspruch 1, <u>dadurch gekennzeichnet</u>, daß

der Pufferspeicher ein Analogwertspeicher ist.

21. Schaltung nach Anspruch 1, <u>dadurch gekennzeichnet</u>, daß
die Daten in Form eines mit einem Pilotsignal versehenen
Analogsignals auf dem Aufzeichnungsmedium gespeichert
sind.

1/3     0046231

Fig.1 (bekannt)

Fig.2 (bekannt)

Fig.3 (bekannt)

Fig.4

Fig.5

Fig.6

Fig.7

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FUNKSCHAU, Band 52, Nr. 1, Januar 1980, Seiten 68-72 München, DE. "Dichtspeichertechnik ermöglicht Mini-Schallplatte" <br><br> * Abbildung 3; Seite 70, rechte Spalte, Zeilen 7-14 * <br><br> -- | 1,3,5, 6,15, 17,19 |
| | DE - A - 2 946 702 (VICTOR COMPANY OF JAPAN) <br><br> * Abbildung 1; Seite 17 - Seite 20, Zeile 3 * <br><br> & GB - A - 2 039 193 <br><br> -- | 1,3,5, 6,15- 17,19 |
| | IBM TECHNICAL DISCLOSURE BULLETIN, Band 20, Nr. 8, Januar 1978, Seiten 3255-3258 New York, U.S.A. J.F. HOLSTEEN: "Magnetic disk file data synchronizing circuit" <br><br> * Insgesamt * <br><br> -- | 1,3,5, 6,11 |
| | US - A - 3 900 890 (EIBNER) <br><br> * Abbildungen 2-4; Spalte 3, Zeile 64 - Spalte 7, Zeile 33 * <br><br> -- | 1,3,5, 6,11 |
| A | IBM TECHNICAL DISCLOSURE BULLETIN, Band 20, Nr. 7, Dezember 1977, Seiten 2581-2583 New York, U.S.A. R.A. AZIZ: "Data storage" <br><br> -- ./. | 1 |

**KLASSIFIKATION DER ANMELDUNG (Int. Cl.³)**

G 11 B 5/09//
G 11 B 5/012

**RECHERCHIERTE SACHGEBIETE (Int. Cl.³)**

G 11 B 5/09
5/012
5/016

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-10-1981 | CARTRYSSE |

EPA form 1503.1 06.78

Europäisches
Patentamt

**EUROPÄISCHER RECHERCHENBERICHT**

004623 1
Nummer der Anmeldung

EP 81 10 6078

-2-

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| A | US - A - 3 864 735 (DAVIS et al.) | 1 | |
| A | DE - A - 1 449 719 (MOHAWK DATA SCIENCES CORP.) | 1 | |
| | & GB - A - 1 036 188 | | |
| A | FR - A - 2 418 593 (THOMSON-BRANDT) | 1 | |
| A | US - A - 3 872 503 (SHUTTERLY) | 1 | |

---

RECHERCHIERTE SACHGEBIETE (Int. Cl. ³)